# EUROPEAN PATENT SPECIFICATION

(11) **EP 2 168 708 B1**
(45) Date of publication and mention of the grant of the patent: **20.08.2014**
(21) Application number: 09170600.2
(22) Date of filing: 17.09.2009
(51) Int. Cl.: B23K 20/12

(54) **Friction stir welding method and system.**
Verfahren un d Vorrichtung zum Reibschweißen
Procédé et dispositif de soudage par malaxage.

(30) Priority: 25.09.2008 US 237856
(43) Date of publication of application: 31.03.2010
(73) Proprietor: Embraer S.A., 12227-901 São José Dos Campos SP (BR)
(72) Inventor: Cruz, Marcio, Sao José dos Campos (BR); Andena, Mauricio, Sao José dos Campos (BR); Pereira, Edson, Sao José dos Campos (BR); Apparecido Zanini, Hamilton, Sao José dos Campos (BR); Ferreira Fernandez, Fernando, Sao José dos Campos (BR); Da Costa, Jefferson Adriano, Sao José dos Campos (BR); De Oliviera Pereira, Robson F., Sao José dos Campos (BR); Freitas, Gustavo, Sao José dos Campos (BR)
(74) Representative: Liesegang, Eva

(56) References cited:
- WO-A1-00/02704
- JP-A- 3 124 384
- US-A1- 2002 149 331
- US-A1- 2005 006 441

## Description

### FIELD

The technology herein generally relates to friction stir welding. Still more specifically, the technology herein relates to an axial force system that monitors and controls the downforce of a friction stir welding orbital spindle by correcting axial tool position along the welding, e.g., according to numerical control parameters. The technology herein also includes a welding safety system that uses laser sensing to avoid tooling collision, and to other friction stir welding spindle control techniques.

### BACKGROUND AND SUMMARY

The present invention relates to a friction stirred welding system as claimed in the preamble of claim 1 and a method for performing friction stirred welding as claimed in claim 7.

WO 00/02704A1 discloses a friction stirred welding system and a method for performing friction stirred welding.

Most people think of welding as requiring a torch or arc that is hot enough to melt the materials being welded. However, a kind of welding called friction stir welding (FSW) is a solid-state joining process that can join materials without melting them. It is commonly used for applications where it is helpful that the original material characteristics remain largely unchanged. Friction stir welding can be used to weld aluminum, magnesium, copper, titanium, steel, and some plastics.

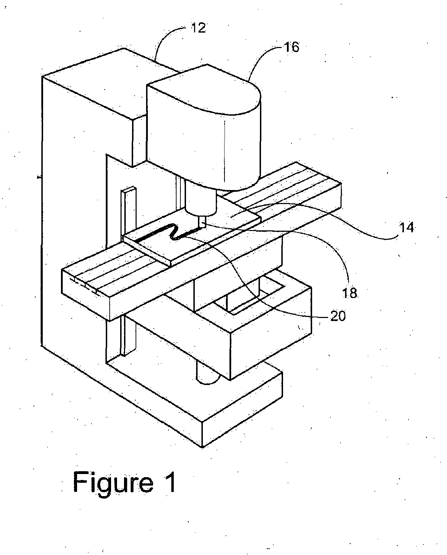

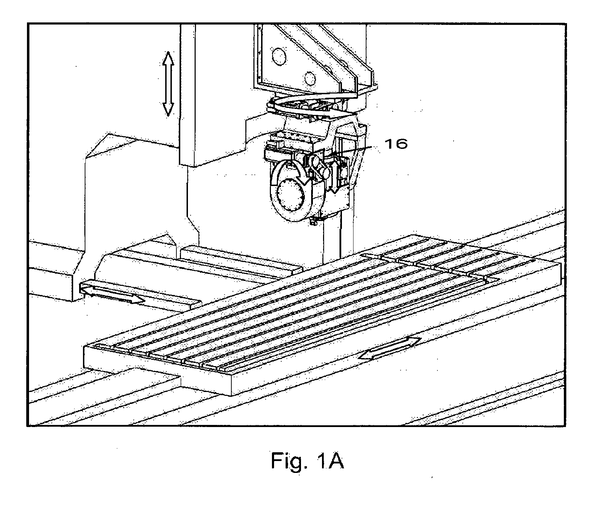

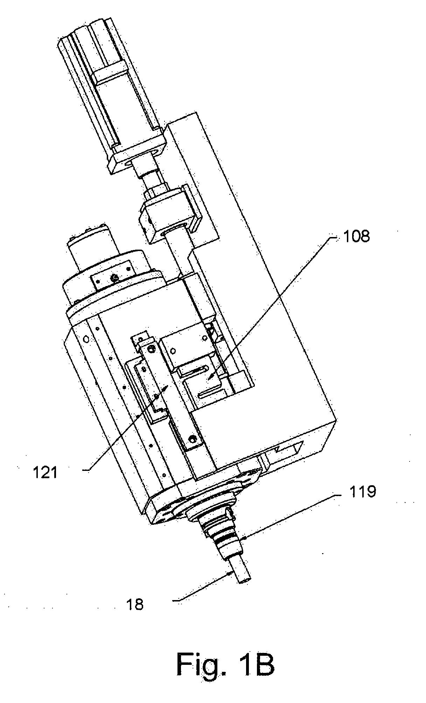

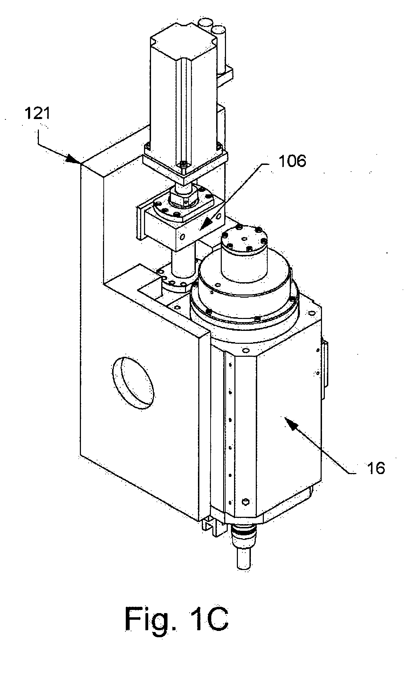

Figures 1, 1A, 1B and1C show exemplary illustrative friction stir welding equipment. To accomplish friction stir welding, a specially designed rotating tool heats up and mixes the interface portions where two parts meet. This heating and mixing of the materials in solid state joins the parts without causing them to melt. The rotating tool is in the shape of a pin mounted on a rotating spindle. The tool has a shoulder that doesn't penetrate into the material to be welded, but rotates over it. This rotation generates friction and consequently thermal energy that softens the material to be welded.

As shown in Figures 1 and 1A-1C, the specially designed tool is typically cylindrical with shoulders, and has a profiled threaded/unthreaded wear-resistant probe (pin or nub) 18. The spindle 16 typically rotates the tool 18 at a constant speed and feeds the tool at a constant traverse rate. To join two pieces together, the tool 18 is inserted into a joint line between two pieces of sheet or plate material which are butted together. The parts are generally clamped rigidly onto a backing bar in a manner that prevents the abutting joint faces from being forced apart. The length of the pin 18 is generally slightly less than the weld depth required. The tool shoulder is in contact with the work surface, and the pin is then moved relative to the workpiece.

As the spindle 16 rotates pin 18, frictional heat is generated between the welding tool shoulder and pin and the material of the workpieces. This heat, along with the heat generated by the mechanical mixing process and the adiabatic heat within the material, causes the stirred materials to soften without reaching the melting point. The tool 18 traverses along the weld line. As the rotating pin 18 is moved in the direction of welding, the leading face of the pin, assisted by a special pin profile, forces plasticized material to the back of the pin while applying a substantial forging force to consolidate the weld material. The welding of the material is accomplished by plastic deformation and dynamic recrystallization in the solid state. The frictional stir welding equipment can be programmed to provide any of a variety of welding patterns for lap and butt joints in complex surfaces under electronic control (e.g., by a Numerical Control unit).

FSW provides a number of potential advantages over conventional fusion-welding processes such as for example:
- Good mechanical properties of the welded workpiece without need to melt the workpieces;
- Improved safety due to the absence of toxic fumes or the spatter of molten material;
- Welding patterns are easily automated on relatively simple milling machines;
- Can operate in all positions (horizontal, vertical, etc);
- Generally good weld appearance and minimal thickness under/over-matching, thus reducing the need for expensive machining after welding;
- Low environmental impact
- Other.

During friction stir welding, a number of forces will act on the tool 18. For example, a downwards force is used to maintain the position of the tool 18 at or below the material surface. A traversal force acts parallel to the tool 18's motion. A lateral force may act perpendicular to the tool traverse direction. A torque is used to rotate the tool 18. How much torque is used will depend on the downforce and the friction coefficient (sliding friction) and/or the flow strength of the material in the surrounding region (sticking friction).

In many cases, the vertical position of the tool 18 is preset and so the load will vary during welding. However, friction stir welding machines that automatically control some or all of these various forces to provide constant downforce provide certain advantages. In this case, the Figure 1, 1A friction stir welding equipment includes actuators and sensors that are able to automatically control the position, orientation and motion of the pin 18. Some friction stir welding systems include various sensors such as load cells, pressure sensors and displacement sensors that sense the position of the tool 18 and the amount of force the tool is applying. A control system can be used to control tool position and downforce in response to these sensed parameters.

In order to prevent tool fracture and to minimize excessive tool wear, it is generally desirable to control the welding operation so that the forces acting on the tool are as low as possible and sudden changes are avoided. Conditions that favor low forces (e.g. high heat input, low travel speeds) may however be undesirable from the point of view of productivity and weld properties. While constant downforce is a desirable design goal, because of the many factors involved it can be difficult to achieve. Complete safety from the tool colliding with the backing surface is often not possible due to slight warpage or other distance variations of the backing relative to the tool.

While much work concerning automatic control of friction stir welding equipment has been done in the past, further improvements and developments are possible and desirable.

The technology herein provides friction spin welding equipment and methods, developed according to requirements of high reliability, robustness, precision and low cost, in order to weld lap and butt joints in complex surfaces with fixed or substantially constant pin tool control force.

Exemplary illustrative non-limiting equipment comprises a control force orbital spindle. A coaxial sensor measures downforce. Simultaneously, an axial electrical actuator is controlled to correct the axial tool position along the welding, by a direct axial force system control, in order to maintain controlled downforce according to parameters previously set, based on numerical control. The equipment also sets up, monitors and controls spindle rotation speed, welding speed, acceleration speed and downforce using for example closed loop control functions. The exemplary illustrative non-limiting implementation may also record in a database the downforce and tool welding position during welding.

In addition, exemplary illustrative non-limiting equipment comprises a laser system that scans the backing surface before welding and corrects original tool path, in order to get an offset tool path. A precision alarm system provides safe welding while preventing the tool from colliding with the backing.

The preferred embodiment provides a friction stirred welding system according to claim 1.

The system may further include including an alarm that indicates if the axial distance between the tool and the backing is less than a predetermined threshold distance determined based at least in part on said measured variations.

The system may further include a data logger that logs welding parameters during welding.

The system may further include a closed loop control arrangement that controls rate of rotation of said tool.

The preferred embodiment further provides a method of performing friction stirred welding according to claim 7.

The method may further avoid oscillations of the load applied to the workpiece by applying proportional integral derivative control to maintain downforce of said tool constant or substantially constant during welding.

The method may measure variations in axial distance between a spindle into which the tool is mounted and a backing onto which the workpiece is placed, and using said measured variations to correct axial tool position and avoid collision between said tool and the backing.

The method may generate an alarm if the axial distance between the tool and the backing is less than a predetermined threshold distance determined based at least in part on said measured variations.

The method may automatically log welding parameters during welding.

The method may control rate of rotation of said tool using a closed loop control process.

### BRIEF DESCRIPTION OF THE DRAWINGS

These and other features and advantages will be better and more completely understood by referring to the following detailed description of exemplary non-limiting illustrative embodiments in conjunction with the drawings of which:
Figure 1 shows exemplary illustrative non-limiting friction stir welding equipment;
Figure 1A is a more detailed view of the spindle portion of the Figure 1 exemplary illustrative non-limiting friction stir welding equipment;
Figures 1B and 1C show an exemplary illustrative non-limiting friction stir welding spindle;
Figure 2 shows an overall exemplary illustrative non-limiting electronic control system block diagram;
Figure 2A shows an exemplary illustrative non-limiting machine control algorithm and process;
Figure 3 shows an exemplary illustrative non-limiting portion of the Figure 2 control system including spindle control components;
Figure 4 shows an exemplary illustrative spindle downforce control system;
Figure 5 shows an exemplary illustrative spindle downforce control system using a laser sensor to sense variations in distance to a backing surface;
Figure 6 illustrates an exemplary illustrative technique for using a laser sensor to sense actual distance to the backing;
Figure 7 shows the Figure 5 implementation using the distance the laser sensor sensed to establish a distance alarm threshold;
Figure 8 shows an exemplary illustrative non-limiting prior art technique for controlling tool minimum distance to backing that sometimes caused collisions;
Figure 9 shows a further exemplary illustrative non-limiting technique for controlling tool minimum distance to backing through use of laser sensing of actual distance to the backing, thereby avoiding collisions;
Figure 10 shows an exemplary illustrative non-limiting alarm generation technique; and
Figure 11 shows an exemplary illustrative non-limiting closed loop feedback control technique for controlling friction stir welding rotation.

### DETAILED DESCRIPTION

Figure 1 is a side perspective view of exemplary illustrative non-limiting friction stir welding (FSW) equipment 100. Equipment 100 includes a frame 12 that moveably suspends a spindle 16 above a backing holding a workpiece 14. A rotating pin 18 replaceably installed in the spindle (this rotating pin is sometimes herein referred to as "the tool") rotates in contact with the workpiece 14. By rotating in contact with the workpiece 14 with a desired amount of downforce, the rotating pin 18 accomplishes friction spin welding of the workpiece thereby for example welding two separate abutting pieces together along a weld line 20,

An electronic control system 200 controls the operation of equipment 100. In the exemplary illustrative non-limiting implementation, equipment 100 includes spindle 16 mounted in such a way that it can be controllable moved and positioned relative to the workpiece 14 clamped to or otherwise supported by the backing. The workpiece 14 typically comprises two pieces that are clamped to the backing so as to abut one another. The equipment 100 automatically controls the spindle 16's position and orientation as well as the rate of rotation of the welding pin 18 mounted therein in order to accomplish friction stir welding under controlled conditions.

As shown in Figure 1A, the equipment 100 can control the translational and rotational position and orientation of the pin 18 relative to the backing in six degrees of freedom. For example, the equipment 100 can translate the backing back and forth (along the x axis) relative to the pin 18. Equipment 100 can also translate the pin 18 in two additional axes (y axis and z axis) relative to the backing, and the spindle 16 can rotate the pin 18 about all three rotational axes (**pitch axis A, yaw axis w, and roll axis C**). Such freedom of motion provides a high degree of controllability. In addition, spindle 16 can control the amount of downforce the pin 18 exerts onto the workpiece.

Figures 1B and 1C show additional details of electromechanical control actuators provided within the spindle 16 for accomplishing controlled motion and positioning of the pin 18 relative to the workpiece in six degrees of freedom, and further shows details of load cells that can be used to dynamically sense downforce. Note that the term "downforce" is not limited to the amount of force the spindle 16 or pin 18 applies downward in the vertical direction (i.e., toward the center of the earth) but can encompass force the tool applies toward the workpiece no matter what orientation the tool and workpiece assume relative to the horizon.

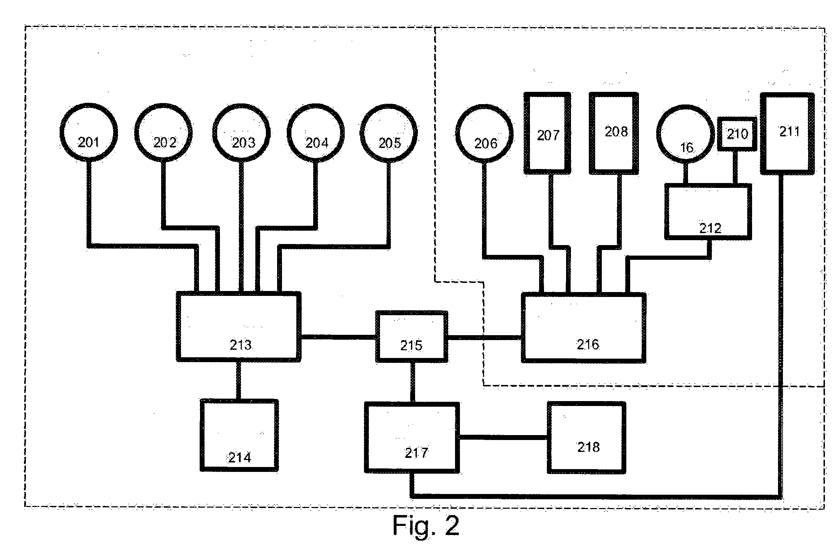

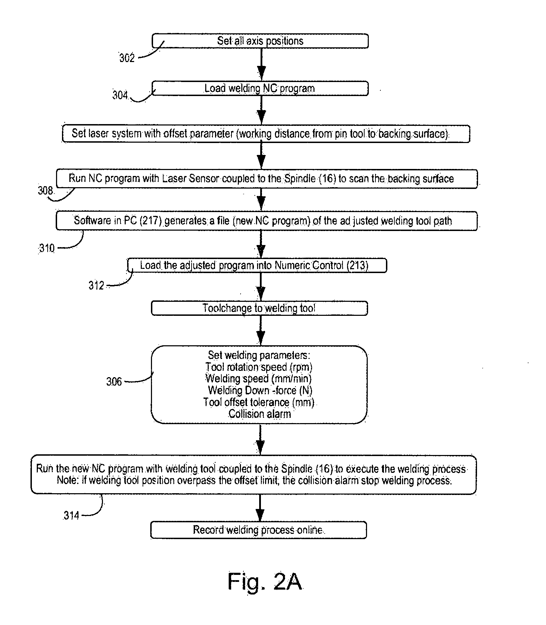

Figure 2 is a schematic illustration of an exemplary illustrative non-limiting electronic control system 200. Non-limiting control system 200 includes a CNC numeric control 213, a machine operator panel 214, a router 215, a programmable logic controller 216, a personal computer 217, and a PC panel 218. CNC numeric controller 213 controls actuators which position and move the spindle 16 in three axes of translation and two axes of rotation. Programmable logic controller 216 controls an actuator for the spindle 16's third axis of rotation, and also receives inputs from linear transducer 207 and load cell 208. Spindle 16 is controlled by a spindle drive 212 at least in part in response to rotational feedback sensor 210. A laser sensor 211 may be used to accurately sense position of the tool relative to the workpiece. Personal computer 217 or other suitable processor coordinates the operation of numeric controller 218 and programmable logic controller 213 in response to user inputs from machine operator panel 214 and PC panel 218.

The Numeric Control 213 is responsible to provide precision control of five axis (201, 202, 203, 204, 205) and send information of their position to the Personal Computer 217 and PLC 216 through the Router 215. Machine Operator Panel 214 is used to operate all the functions of the machine. The load control and laser scanning is operated using the PC Panel 218 as an interface for a viewer. As shown in Figure 2A, an exemplary algorithm or process for operating equipment 100 comprises:
- Execute homing command to set all the positions of the five axes (block 302)
- Load the NC program of the welding tool path into Numeric Control 213 (block 304)
- Set up the welding process parameters (block 306)
- Run the program with Laser Sensor coupled to the Spindle 16 to scan the backing surface (block 308)
- The software in PC 217 generates a file (new NC program) of the adjusted welding tool path (block 310)
- Load the adjusted program into Numeric Control 213 (block 312)
- Run the new NC program with welding tool coupled to the Spindle 16 to execute the welding process (block 314)

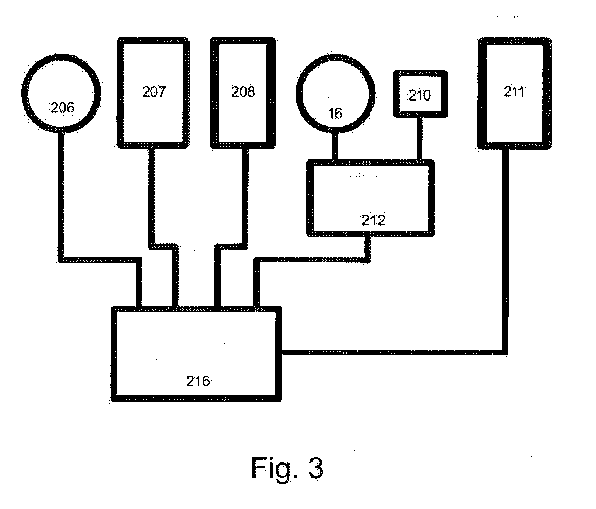

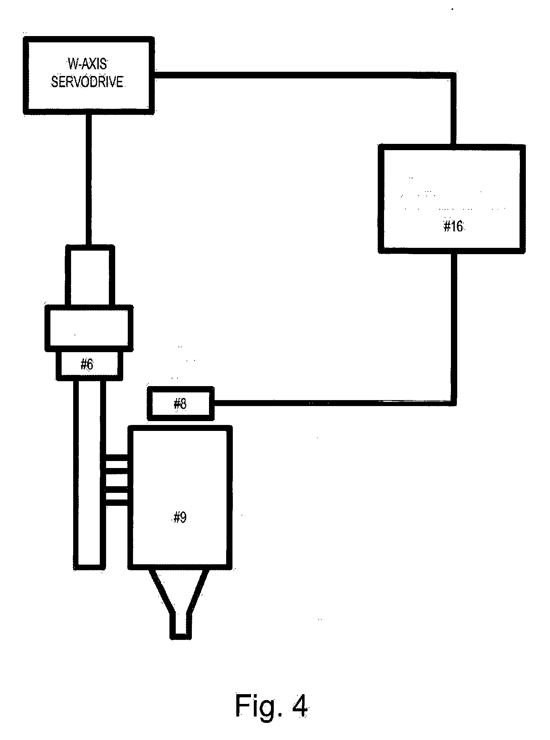

Figures 3 and 4 show exemplary spindle and load control provided by the programmable logic controller 216. The welding process on exemplary illustrative non-limiting machine 100 works according to a load control process. The exemplary load control is responsive to a load cell 208 that measures the direct axial downforce applied to the workpiece. It is also responsive to a precision position measure system provided by a linear transducer 207.

The exemplary illustrative non-limiting Programmable Controller 216 receives the following signals which it uses to provide precision control of the process:
- W axis position;
- Downforce value;
- Status of Numeric Control (alarms and faults).

The exemplary illustrative non-limiting system monitors and controls the following items:
- Downforce applied to workpiece during weld;
- Distance from welding tool to the backing;
- Spindle rotation speed.

The Numeric Control 213 receives the following information from Programmable controller 216:
- Status of the system (alarms and faults)
- Process welding parameters values.

The exemplary illustrative non-limiting system 100 works by controlling the downforce applied to the workpiece and simultaneously monitoring the distance from pin tool to the backing to avoid collisions.

In more detail, the W-Axis actuator 206 is responsible to move the spindle motor inside the Head housing **121**. The linear transducer 207 is responsible to send the information of W axis position to the PLC 216 to keep the tool a safe distance (i.e, at least minimum clearance) from the backing during welding. Load Cell 208 directly measures the pressure applied to the workpiece during welding in the W axis. Spindle 16 provides the rotation to the tool 18. Rotation feedback sensor 210 measures rotation of the spindle 16 and sends it to the Spindle drive 212 to keep it in a fixed (constant or substantially constant) rotation during welding.

Laser Sensor 211 scans the welding backing and sends the information to the PC 217 to adjust the tool path in the welding NC (numerical control) program. Spindle drive 212 controls the rotation of the tool. Programmable Logic Controller 216 controls all the logic of the system include the downforce control and security of the distance from tool to backing to avoid collisions.

### Exemplary Illustrative Non-Limiting Welding Downforce Control

The exemplary illustrative non-limiting implementation provides downforce control by measuring directly the load applied on the workpiece during all processes (see Figure 4). There are three parameters for this control in the exemplary illustrative non-limiting implementation; all of them are previously set or predetermined before starting the welding process. The three parameters are:
1 - Downforce into workpiece (set-point load);
2 - Downforce work tolerance (range of work);
3 - Downforce collision limit (to protect the machine and backing).

The exemplary illustrative non-limiting system100 provides a precision closed loop control where the PLC 216 acts directly in the W-axis Servo Drive to maintain the load between tolerance limits (referred to a set-point load) during all welding. To avoid oscillations of the load applied to the workpiece, the control comprises with a PID (proportional integral derivative) control which maintains the load constant during the welding process.

### Exemplary Illustrative Non-Limiting Scanning Of The Welding Backing Surface

To start the scanning process, the Laser Sensor 211 is coupled to the Spindle 16 with the respective tool holder. After scanning, the laser sensor 211 may be removed and the welding tool 18 is installed in the tool holder in its place to start the welding process.

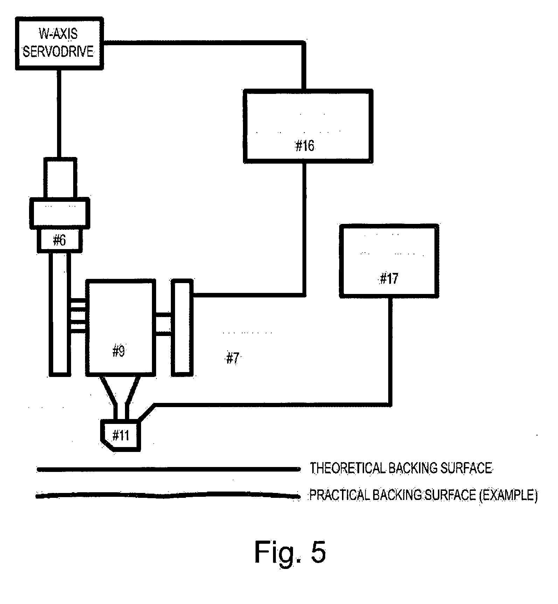

The scanning is used to adjust any deviation of the backing surface compared with the theoretical surface where the workpiece is placed (see Fig. 5). A parameter set according to process features represents the working distance from the pin tool 18 to the backing. In the exemplary illustrative non-limiting implementation, the alarm system responds directly to this adjustment. The adjustment provided by the scanning of laser sensor 211 thus provides working accuracy for the alarm.

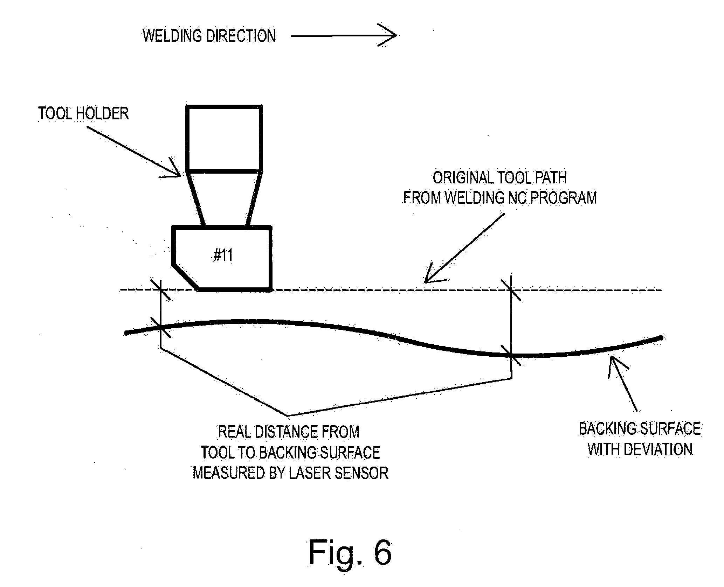

The exemplary illustrative non-limiting scanning process involves running the welding program with a laser sensor 211 coupled in the spindle as shown in the Fig. 6. When the program is running, the measuring data from the laser system records simultaneously in the PC 217. After the program is finished, the software in the PC generates a file of the adjusted welding tool path. The adjusted program is used in the machine to start the welding process.

### Exemplary Illustrative Non-Limiting Distance Monitoring For Alarm System

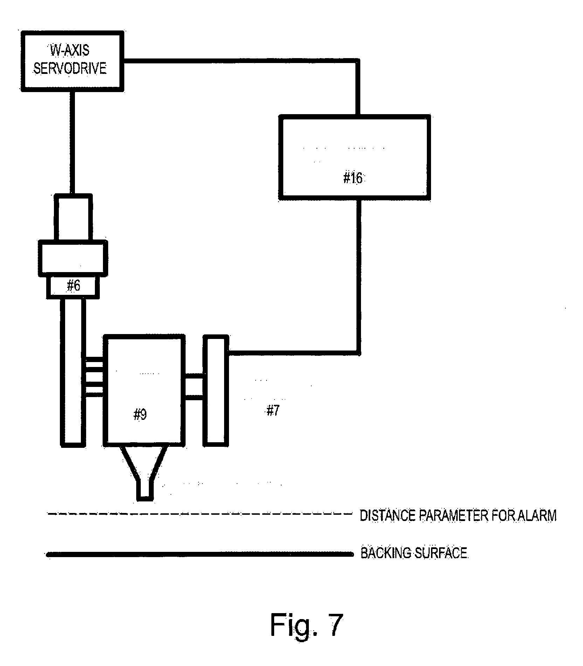

The exemplary illustrative non-limiting system 100 provides precision monitoring using linear transducer 207 and PLC 216 (see Fig. 7). The security of the backing provides a precise alarm system that works to protect the backing against collisions with the pin tool during the automatic welding process. This system works with high accuracy after the scanning of the backing surface. When the machine is working, the system 100 follows the NC (Numeric Control) program adjusted and simultaneously monitors the minimum distance from tool to backing (distance parameter for alarm system).

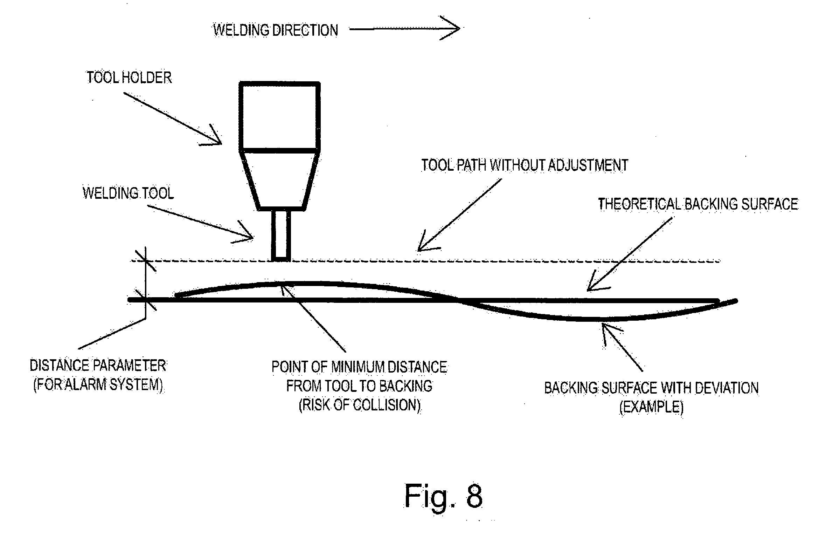

Figure 8 shows an exemplary illustrative non-limiting prior art welding process without a laser scanning step previously performed. In this situation, the system understands or assumes the backing surface is a line or flat plane without deviations. Thus, considering that the tool path is not adjusted, risks of collision may occur at the points where the tool passes with a minimum distance from the backing.

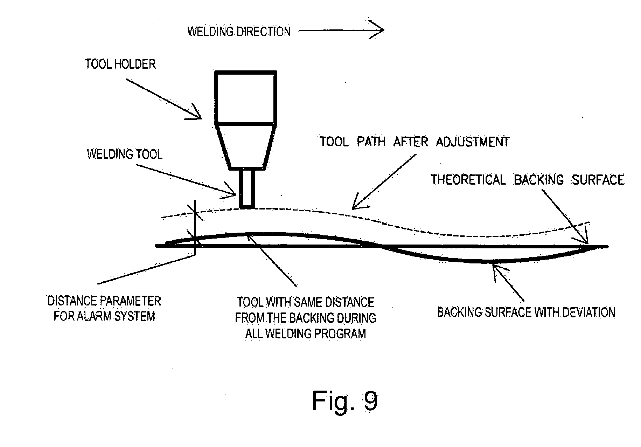

Figure 9 illustrates the welding process after system 100 has performed the scanning step. Scanning with the laser sensor provides a kind of map of the backing. Such map could include three dimensional features of the backing for example. After scanning of the backing surface, the tool path is adjusted and the distance monitoring for the alarm system will work with high accuracy to avoid collisions between the pin tool and the backing. There is a parameter (distance parameter for alarm) set on the Operator Panel 214 that refers to the minimum distance from the tool to the backing. This parameter is adjusted according with workpiece thickness, process and tool features in the exemplary illustrative non-limiting implementation.

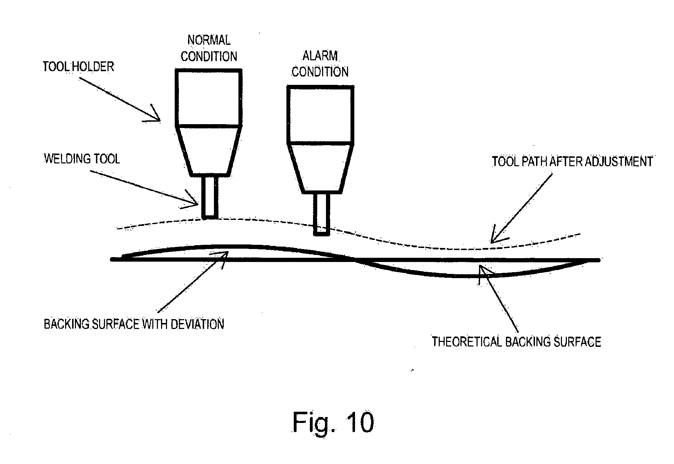

Figure 10 shows an exemplary illustrative non-limiting welding process alarm system operation. When the program starts, the system 100 also starts monitoring this distance parameter measured by the Linear Transducer 207. If the tool activates a set-point distance for triggering an alarm, the execution of the program stops, all positional and orientation axes are maintain in a stopped or frozen state, the PLC 216 commands the W-axis servo drive to take the W-axis out of the workpiece, and an alarm is shown in the Operator Panel 214.

The welding parameters of downforce and W axis position are recorded by Personal Computer 217 in real time during the welding process in order to register and analyze the welding performance.

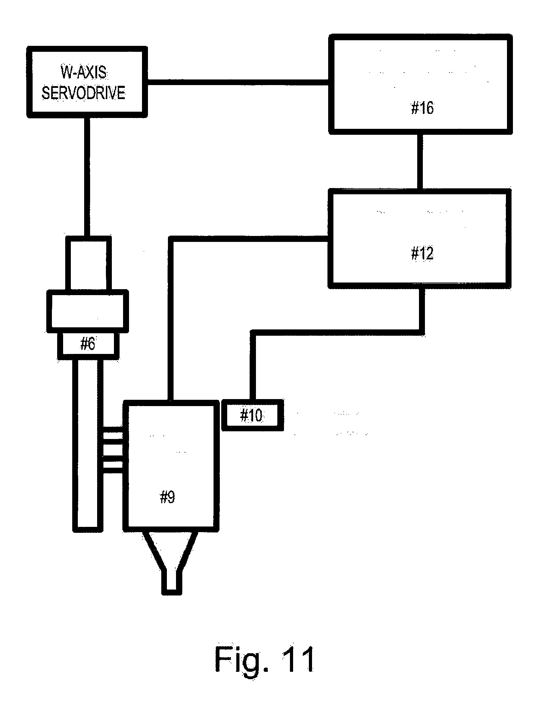

The system has a rotation control for the Spindle 16 provided by a Rotation Feed back 210. The rotation feed back is performed using a pulse sensor. The signal feed back is sent to the Spindle Drive 212 closing a control loop to maintain constant velocity (fig.11). This closed loop feedback is used to keep the tool rotation constant during the welding process.

## Claims

1. A friction stirred welding system of the type including a spindle having a rotating tool mounted therein, said system comprising:
said tool rotating in contact with a workpiece,
a sensor that measures the downforce the rotating tool applies to said workpiece;
a control system coupled to said sensor, said control system being structured to control said electrically controlled actuator to correct axial tool position at least in part in response to said measured downforce to thereby maintain the load between tolerance limits, said control system being further structured to avoid oscillations of the load applied to the workpiece by applying proportional integral derivative control to maintain the load constant or substantially constant during welding;
**characterized in that** a laser sensor is provided, and is adapted to be accepted by the spindle and interchangeable with said rotating tool, said laser sensor in use mapping the axial distance between the spindle and a backing,
Further **in that** the axial position of said tool being determined by an electrically controlled actuator in six degrees of freedom.

2. The system of claim 1, further including a laser sensor that measures variations in axial distance between the tool and the workpiece.

3. The system of claim 1, wherein said laser sensor is structured to measure variations in axial distance between the spindle into which the tool is mounted and a backing onto which the workpiece is placed, and said control system uses said measured variations to correct axial tool position and avoid collision between said tool and the backing.

4. The system of claim 3, further including an alarm that indicates if the axial distance between the tool and the backing is less than a predetermined threshold distance determined based at least in part on said measured variations.

5. The system of claim 1, further including a data logger that logs welding parameters during welding.

6. The system of claim 1, wherein said control system includes a closed loop control arrangement that controls rate of rotation of said tool.

7. A method of performing friction stirred welding, controlled by an electronic control system (200) based on friction stirred welding equipment (100), wherein the method comprises the following steps:
a) Locally executing in the machine operator panel (214) a Numeric controller command (213) in order to fix the positions of five axis (201, 202, 203, 204, 205) and load the route program for a welding tool (18) with the aim of setting welding process parameters
b) Inserting a laser sensor (211) into a friction stirred welding spindle (16) to scan the welding backing
c) Using the laser sensor (211) coupled to the spindle (16) to map the axial distance at which the friction stirred welding spindle (16) is disposed from the backing welding and then send the information to a PC (217) wherein a set path file of the welding tool (18) route is generated;
d) Loading the set path of the welding tool (18) route into a Numeric Controller (213);
e) Removing said laser sensor (211) from said spindle (16) and inserting a welding tool (18) in its place in order to execute the set path of the welding tool (18) route
f) Rotating said welding tool (18)
g) Moving said rotating tool (18) into contact with a workpiece (14) placed on said backing surface, and
h) Using said map to control an electrically controlled actuator to correct axial tool position relative to said workpiece (14);
wherein said mapping includes measuring variations in axial distance between a spindle (16) into which the tool (18) is mounted and the backing onto which the workpiece (14) is placed, and using said measured variations to correct axial tool position and avoid collision between said tool (18) and the backing, and wherein said rotating tool (18) in contact with said workpiece (14) plasticizes portions of said workpiece (14) while keeping said workpiece (14) in the solid state, thereby welding said workpiece (14); and wherein the welding parameters are logged in a personal computer PC (217) in real time during welding process to log and analyze the welding performance.

8. The method of claim 7, further including avoiding oscillations of the load applied to the workpiece by applying proportional integral derivative control to maintain downforce of said tool constant or substantially constant during welding.

9. The method of claim 7, wherein said mapping includes measuring variations in axial distance between a spindle into which the tool is mounted and a backing onto which the workpiece is placed, and using said measured variations to correct axial tool position and avoid collision between said tool and the backing.

10. The method of claim 7, further including generating an alarm if the axial distance between the tool and the backing is less than a predetermined threshold distance determined based at least in part on said measured variations.

11. The method of claim 7, further including automatically logging welding parameters during welding.

12. The method of claim 7, further including controlling rate of rotation of said tool using a closed loop control process.

## Patentansprüche

1. Rührreibschweiß-System der Bauart mit einer Spindel, die ein darin montiertes Rotationswerkzeug aufweist, wobei das System umfasst:
das Rotationswerkzeug in Kontakt mit einem Werkstück;
einen Sensor, der die abwärts gerichtete Kraft misst, welche das Rotationswerkzeug auf das Werkstück ausübt;
ein Steuersystem, das mit dem Sensor gekoppelt ist, wobei das Steuersystem dazu eingerichtet ist, eine elektrisch gesteuerte Betätigungseinrichtung zu steuern, um die axiale Werkzeugposition wenigstens zum Teil abhängig von der gemessenen abwärts gerichteten Kraft zu korrigieren, um dadurch die Last innerhalb von Toleranzgrenzen zu halten, wobei das Steuersystem ferner dazu eingerichtet ist, Schwingungen der auf das Werkstück aufgebrachten Last zu vermeiden, indem eine PID-Regelung angewandt wird, um die Last während des Schweißens konstant oder im Wesentlichen konstant zu halten;
**dadurch gekennzeichnet, dass** ein Lasersensor vorgesehen und dazu eingerichtet ist, von der Spindel aufgenommen zu werden und mit dem Rotationswerkzeug vertauschbar zu sein, wobei der Lasersensor im Gebrauch den axialen Abstand zwischen der Spindel und einer Unterlage abbildet,
und dass die axiale Position des Werkzeugs von einer elektrisch gesteuerten Betätigungseinrichtung mit sechs Freiheitsgraden ermittelt wird.

2. System nach Anspruch 1, mit ferner einem Lasersensor, der Variationen in dem axialen Abstand zwischen dem Werkzeug und dem Werkstück misst.

3. System nach Anspruch 1, wobei der Lasersensor dazu eingerichtet ist, Variationen in dem axialen Abstand zwischen der Spindel, in der das Werkzeug aufgenommen ist, und einer Unterlage, auf die das Werkzeug gelegt wird, zu messen, und wobei das Steuersystem die gemessenen Variationen nutzt, um die axiale Werkzeugposition zu korrigieren und eine Kollision zwischen dem Werkzeug und der Unterlage zu vermeiden.

4. System nach Anspruch 3, mit ferner einem Alarm, der angibt, wenn der axiale Abstand zwischen dem Werkzeug und der Unterlage geringer ist als ein vorgegebener Schwellwert für den Abstand, welcher auch wenigstens teilweise auf der Grundlage der gemessenen Variationen ermittelt wird.

5. System nach Anspruch 1, mit ferner einem Datenlogger, der während des Schweißens Schweißparameter aufzeichnet.

6. System nach Anspruch 1, wobei das Steuersystem eine Regelung mit geschlossener Schleife umfasst, welche die Drehzahl des Werkzeugs regelt.

7. Verfahren zum Durchführen von Rührreibschweißen, gesteuert durch ein elektronisches Steuersystem (200), mit einer Rührreibschweiß-Einrichtung (100), wobei das Verfahren die folgenden Schritte umfasst:
a) lokales Ausführen eines numerischen Steuerbefehls (213) in dem Geräte-Bedienfeld (214), um die Positionen von fünf Achsen (201, 202, 203, 204, 205) festzulegen und das Wegeprogramm für ein Schweißwerkzeug (18) zu laden, um Schweißprozessparameter einzustellen;
b) Einfügen eines Lasersensors (211) in eine Rührreibschweiß-Spindel (16), um die Schweißunterlage zu scannen;
c) Verwenden des Lasersensors (211), der mit der Spindel (16) gekoppelt ist, um den axialen Abstand abzubilden, bei dem die Rührreibschweiß-Spindel (16) relativ zur Schweißunterlage angeordnet ist, und dann Senden der Information zu einem PC (217), wobei eine Datei des eingestellten Wegs der Schweißwerkzeug-Route (18) erzeugt wird;
d) Laden des eingestellten Wegs der Schweißwerkzeug-Route (18) in eine numerische Steuereinrichtung (213);
e) Entfernen des Lasersensors (211) aus der Spindel (16) und Einfügen eines Schweißwerkzeugs (18) an dessen Stelle, um den eingestellten Weg der Schweißwerkzeug-Route (18) auszuführen;
f) Drehen des Schweißwerkzeugs (18);
g) Inkontaktbringen des Rotationswerkzeugs (18) mit einem Werkstück (14), das auf der Oberfläche der Unterlage liegt; und
h) Verwenden der Abbildung zum Steuern einer elektrisch gesteuerten Betätigungseinrichtung, um die axiale Werkzeugposition in Bezug auf das Werkstück (14) zu korrigieren;
wobei das Abbilden umfasst: das Messen von Variationen im axialen Abstand zwischen einer Spindel (16), in der das Werkzeug (18) montiert ist, und der Unterlage, auf die das Werkstück (14) gelegt wird, und Verwenden der gemessenen Variationen zum Korrigieren der axialen Werkzeugposition und zum Vermeiden einer Kollision zwischen dem Werkzeug (18) und der Unterlage, und wobei das Rotationswerkzeug (18) in Kontakt mit dem Werkstück (14) Teile des Werkstücks (14) plastifiziert, während das Werkstück (14) in seinem festen Zustand bleibt, wodurch das Werkstück (14) geschweißt wird; und wobei die Schweißparameter während des Schweißprozesses in einem Personalcomputer PC (217) in Echtzeit aufgezeichnet werden, um die Schweißleistung aufzuzeichnen und zu analysieren.

8. Verfahren nach Anspruch 7, mit dem weiteren Schritt des Vermeidens von Schwingungen der auf das Werkstück aufgebrachten Last durch Anwenden einer PID-Regelung, um die abwärts gerichtete Kraft des Werkzeugs während des Schweißens konstant oder im Wesentlichen konstant zu halten.

9. Verfahren nach Anspruch 7, wobei das Abbilden umfasst: das Messen von Variationen des axialen Abstands zwischen einer Spindel, in der das Werkzeug aufgenommen wird, und einer Unterlage, auf die das Werkstück gelegt wird, und das Verwenden der gemessenen Variationen zum Korrigieren der axialen Werkzeugposition und zum Vermeiden einer Kollision zwischen dem Werkzeug und der Unterlage.

10. Verfahren nach Anspruch 7, mit dem weiteren Schritt des Erzeugens eines Alarms, wenn der axiale Abstand zwischen dem Werkzeug und der Unterlage geringer ist als ein vorgegebener Schwellwert für den Abstand, welcher auf der Grundlage von wenigstens teilweise der gemessenen Variationen ermittelt wird.

11. Verfahren nach Anspruch 7, mit dem weiteren Schritt des automatischen Aufzeichnens von Schweißparametern während des Schweißens.

12. Verfahren nach Anspruch 7, mit dem weiteren Schritt des Steuerns der Drehzahl des Werkzeugs in einem Regelprozess mit geschlossener Schleife.

## Revendications

1. Système de soudage par friction-malaxage du type comprenant une broche dans laquelle un outil rotatif est monté, ledit système comprenant :
ledit outil tournant en contact avec une pièce,
un capteur qui mesure la force vers le bas que l'outil rotatif applique à ladite pièce ;
un système de commande couplé au dit capteur, ledit système de commande étant structuré pour commander ledit actionneur commandé électriquement pour corriger la position axiale de l'outil au moins en partie en réponse à ladite force vers le bas mesurée pour maintenir de ce fait la charge entre des limites de tolérance, ledit système de commande étant en outre structuré pour éviter des oscillations de la charge appliquée à la pièce en appliquant une commande proportionnelle intégrale dérivée pour maintenir la charge constante ou sensiblement constante pendant le soudage ; **caractérisé en ce qu'**un capteur laser est prévu, et est conçu pour être reçu par la broche et être interchangeable avec ledit outil rotatif, ledit capteur laser, en utilisation, cartographiant la distance axiale entre la broche et un support, et en outre **en ce que** la position axiale dudit outil est déterminée par un actionneur commandé électriquement avec six degrés de liberté.

2. Système selon la revendication 1, comprenant en outre un capteur laser qui mesure les variations de la distance axiale entre l'outil et la pièce.

3. Système selon la revendication 1, dans lequel ledit capteur laser est structuré pour mesurer les variations de la distance axiale entre la broche dans laquelle l'outil est monté et un support sur lequel la pièce est placée, et ledit système de commande utilise lesdites variations mesurées pour corriger la position axiale de l'outil et éviter une collision entre ledit outil et le support.

4. Système selon la revendication 3, comprenant en outre une alarme qui indique si la distance axiale entre l'outil et le support est inférieure à une distance de seuil prédéterminée qui est déterminée au moins en partie sur la base desdites variations mesurées.

5. Système selon la revendication 1, comprenant en outre un enregistreur de données qui enregistre les paramètres de soudage pendant le soudage.

6. Système selon la revendication 1, dans lequel ledit système de commande comprend un agencement de commande en boucle fermée qui commande la vitesse de rotation dudit outil.

7. Procédé d'exécution d'un soudage par friction-malaxage, commandé par un système de commande électronique (200) basé sur un équipement de soudage par friction-malaxage (100), dans lequel le procédé comprend les étapes suivantes :
a) d'exécution localement, dans le panneau d'opérateur de machine (214), d'une commande d'une commande numérique (213) afin de fixer les positions de cinq axes (201, 202, 203, 204, 205) et de charger le programme de trajectoire pour un outil de soudage (18) avec pour objectif de déterminer des paramètres de processus de soudage ;
b) d'insertion d'un capteur laser (211) dans une broche de soudage par friction-malaxage (16) pour balayer le support de soudage ;
c) d'utilisation du capteur laser (211) accouplé à la broche (16) pour cartographier la distance axiale à laquelle la broche de soudage par friction-malaxage (16) est disposée par rapport au support de soudage et pour envoyer ensuite les informations à un ordinateur personnel (217) dans lequel un fichier de trajet déterminé de la trajectoire de l'outil de soudage (18) est généré ;
d) de chargement du trajet déterminé de la trajectoire de l'outil de soudage (18) dans une commande numérique (213) ;
e) de retrait dudit capteur laser (211) de ladite broche (16) et d'insertion d'un outil de soudage (18) à son emplacement afin d'exécuter le trajet déterminé de la trajectoire de l'outil de soudage (18) ;
f) de mise en rotation dudit outil de soudage (18) ;
g) de déplacement dudit outil rotatif (18) en contact avec une pièce (14) placée sur ladite surface de support ; et
h) d'utilisation de ladite carte pour commander un actionneur commandé électriquement pour corriger la position axiale de l'outil par rapport à ladite pièce (14) ;
dans lequel ladite cartographie comprend la mesure des variations de la distance axiale entre une broche (16) dans laquelle l'outil (18) est monté et le support sur lequel la pièce (14) est placée, et l'utilisation desdites variations mesurées pour corriger la position axiale de l'outil et éviter une collision entre ledit outil (18) et le support, et dans lequel ledit outil rotatif (18) en contact avec ladite pièce (14) plastifie des parties de ladite pièce (14) tout en maintenant ladite pièce (14) dans l'état solide, soudant de ce fait ladite pièce (14) ; et dans lequel les paramètres de soudage sont enregistrés dans un ordinateur personnel PC (217) en temps réel pendant le processus de soudage pour enregistrer et analyser la performance de soudage.

8. Procédé selon la revendication 7, consistant en outre à éviter des oscillations de la charge appliquée à la pièce en appliquant une commande proportionnelle intégrale dérivée pour maintenir une force vers le bas dudit outil constante ou sensiblement constante pendant le soudage.

9. Procédé selon la revendication 7, dans lequel ladite cartographie comprend la mesure des variations de la distance axiale entre une broche dans laquelle l'outil est monté et un support sur lequel la pièce est placée, et l'utilisation desdites variations mesurées pour corriger la position axiale de l'outil et éviter une collision entre ledit outil et le support.

10. Procédé selon la revendication 7, consistant en outre à générer une alarme si la distance axiale entre l'outil et le support est inférieure à une distance de seuil prédéterminée qui est déterminée au moins en partie sur la base desdites variations mesurées.

11. Procédé selon la revendication 7, consistant en outre à enregistrer automatiquement des paramètres de soudage pendant le soudage.

12. Procédé selon la revendication 7, consistant en outre à commander la vitesse de rotation dudit outil en utilisant un processus de commande en boucle fermée.
